(19) Europäisches Patentamt

European Patent Office

Office européen des brevets

(11) EP 0 771 827 B1

(12) **EUROPEAN PATENT SPECIFICATION**

(45) Date of publication and mention
of the grant of the patent:
**23.05.2001 Bulletin 2001/21**

(51) Int Cl.[7]: **C08F 255/00**, B29C 47/10,
B29C 47/76
// (C08F255/00, 230:08)

(21) Application number: **96117138.6**

(22) Date of filing: **25.10.1996**

(54) **Process for producing silane-modified polyolefins and extruder apparatus therefor**

Verfahren zur Herstellung von mit Silan modifizierten Polyolefinen und Extruder dafür

Procédé de production de polyoléfines modifiées par un silane et extrudeuse appropriée

(84) Designated Contracting States:
**DE FR GB IT NL**

(30) Priority: **30.10.1995 JP 28197295**
**02.02.1996 JP 1754396**
**02.02.1996 JP 1754596**

(43) Date of publication of application:
**07.05.1997 Bulletin 1997/19**

(73) Proprietor: **SEKISUI KAGAKU KOGYO**
**KABUSHIKI KAISHA**
**Osaka-shi, Osaka 530-8565 (JP)**

(72) Inventors:
• **Fukuoka, Takamasa**
**Takatsuki-shi, Osaka 569 (JP)**

• **Kurio, Hiroyuki**
**Ibaraki-shi, Osaka 567 (JP)**
• **Okabe, Masashi**
**Ninami-ku, Kayoto-shi, Kyoto 601 (JP)**

(74) Representative: **Paul, Dieter-Alfred, Dipl.-Ing. et al**
**Fichtestrasse 18**
**41464 Neuss (DE)**

(56) References cited:
**EP-A- 0 109 272    EP-A- 0 251 161**
**WO-A-93/12148    DE-A- 2 636 709**

• **PATENT ABSTRACTS OF JAPAN vol. 002, no.**
**059 (C-012), 27 April 1978 & JP 53 014750 A**
**(FURUKAWA ELECTRIC CO LTD:THE), 9**
**February 1978**

**Description**

BACKGROUND OF THE INVENTION

Field of the Invention

The present invention relates to a process for producing silane-modified polyolefins by grafting a silicone derivative to polyolefins by radical reaction using a reaction extruder.

The invention relates also to extruder apparatus suitable for use in the process for producing silane-modified polyolefins.

Silane-modified polyolefins are suited to use as materials for covered electric wires, hot water conduits, foaming material, etc. since these resins undergo a crosslinking reaction on contact with water, exhibiting remarkable improvements in mechanical strength, heat resistance, creep resistance, environmental stress cracking resistance, chemical resistance and like properties as compared with usual unmodified polyolefins.

Related Background Art

The process for grafting a silicone derivative to polyolefins by a radical reaction using an extruder conventionally employed for extruding plastics is a technique known as a process for producing silane-modified polyolefins and is presently in wide use.

When this technique was developed for the first time, the so-called Dow process was predominantly practiced wherein vinyltrimethoxysilane or like vinylsilane compound and an organic peroxide were admixed with a solid phase of polyolefin by stirring to prepare a uniform mixture, which was then charged into an extruder to complete a graft reaction. The extruder mixing process was subsequently developed in which the polyolefin and vinylsilane compound were individually charged into the extruder for graft reaction, and the process has been placed into common use.

The extruder mixing process permits a completely continuous reaction, therefore ensures high stability and is also advantageous in respect of the working environment because the process includes no step of preliminarily admixing the vinylsilane compound which is volatile.

However, vinyltrimethoxysilane which is most prevalently used and many other vinylsilane compounds used for the extruder mixing process are substances having a lower boiling point than the extrusion temperature for polyolefins, so that when the polyolefin is melted and heated to the extrusion temperature within the extruder, the vinylsilane compound vaporizes, reversely flowing through the extruder feed zone to become released from the extruder through the feed inlet. This impairs the stability of the supply of vinylsilane compound to the extruder which is a continuous reactor, consequently rendering the graft reaction unstable in the extruder.

To overcome the problem, JP-B-8525/1980 discloses a screw having a diminished cross section at the lengthwise midportion thereof so that acrylic acid or like vinyl compound can be injected into the extruder at an intermediate portion thereof with respect to the direction of flow through the extruder. The screw of this configuration nevertheless has the drawback that the vinylsilane compound injected becomes adhered to the barrel surface and is extruded in the form of a condensation product resembling a colored vitreous solid.

EP-A-0 251 161 discloses a method of manufacturing an extruded product of a fire-retardant crosslinked polyolefin composition, comprising a cooling zone which is formed between an extruder having a supply zone, a compression zone and a metering zone, and a crosshead to set a uniform temperature of a molten resin composition and to cool the composition temperature to a desired temperature. That specific arrangement of the cooling zone downstream from the grafting reaction zone shall avoid the generation of bubbles, i.e. the generation of voids in the extruded product.

An object of the present invention is to overcome the foregoing problems of the prior art and to provide a process for producing a silane-modified polyolefin wherein a stabilized and efficient graft reaction can be effected in the step of modifying a polyolefin with a silane using an extruder.

The Dow process, as well as the extruder mixing process, is likely to produce on the extrudate a gellike substance resulting from early crosslinking and termed a scorch which is peculiar to the graft reaction extrusion of vinylsilane compounds, entailing the problem of giving the extrudate an impaired appearance and reduced strength. The occurrence of scorches is thought attributable to the presence of water which has been adsorbed by polyolefin or ingressed and which permits the vinylsilane compound of the silane-modified polyolefin to undergo a hydrolysis reaction within the extruder to form a silanol compound, further forming a condensation product of siloxane through a dehydration condensation reaction.

To meet the problem, it is common practice to add to the material composition a so-called scorch retardant which is an inorganic or organic compound for absorbing water or reactive with water. For example, JP-B-98655/1989 discloses specific polysiloxane for use as scorch retardant.

However, such scorch retardant, if used, still fails to fully inhibit scorching; it has been considered difficult to actually carry out a continuous operation for several days to several weeks for producing a silane-modified polyolefin. The use of scorch retardant further increases the material cost in producing silane-modified polyolefins.

Another object of the invention is to overcome the above problems and to provide a process for producing a silane-modified polyolefin with good stability over a prolonged period of time, with scorching inhibited in the step of modifying a polyolefin with a silane.

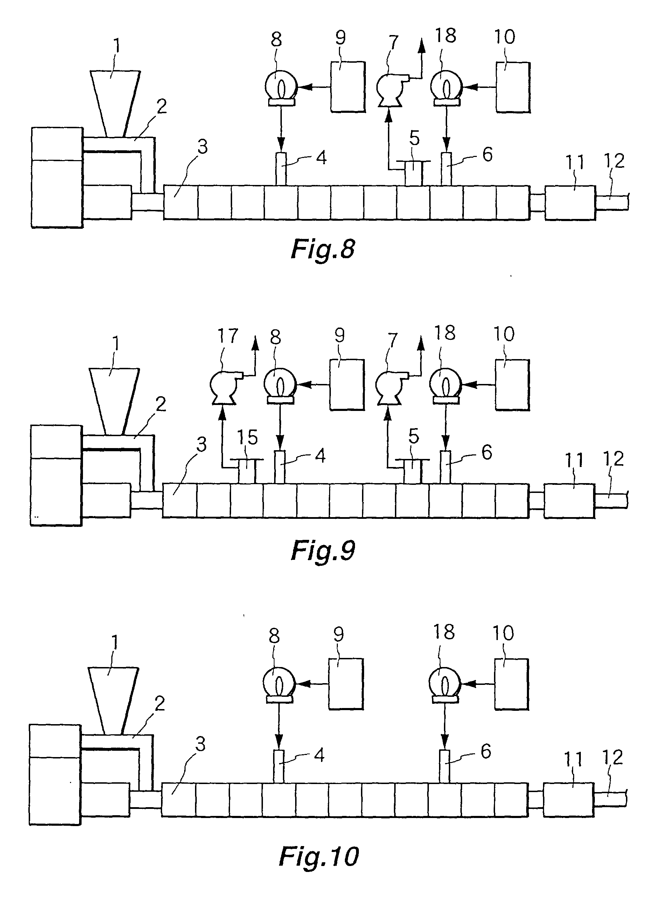

A water crosslinking step, such as high-temperature hydrothermal treatment or immersion in water, for the silane-modified polyolefin generally follows the step of forming the silane-modified polyolefin to a desired shape. To shorten the water crosslinking time, methods have been proposed in which a silanol condensation catalyst serving as a crosslinking reaction accelerator is usually dispersed in the silane-modified polyolefin. For example, JP-A-14750/1978 discloses a method which uses an extruder having a resin composition charging hopper and at least front and rear two liquid injection ports arranged downstream from the hopper, and wherein while a polyolefin resin composition placed in through the hopper is melted and kneaded, a vinylsilane compound and radical initiator are forced into the resulting melt through the front injection port, and a silanol condensation catalyst into the melt through the rear injection port to prepare a kneaded mixture of these materials, which is then formed to a specified shape to obtain a silane-modified polyolefin extrudate (see Comparative Example 4 given later and FIG. 10).

With this production method, however, a crosslinking reaction is likely to occur inside the extruder for the same cause as stated previously, permitting the extrudate to develop scorches and giving rise to the same problem as described. Another problem arises in that an unreacted portion of the vinylsilane compound undergoes self-condensation inside the extruder to form a colored vitreous solid as separated out on the extrudate, resulting in an impaired appearance and lower strength like scorches.

Another object of the invention is to provide a process for producing a silane-modified polyolefin extrudate having a satisfactory appearance and excellent quality and characteristics while inhibiting scorching and the formation of self-condensation product of the vinylsilane compound, and an extrusion apparatus.

SUMMARY OF THE INVENTION

In charging a polyolefin, a vinylsilane compound and a radical polymerization initiator into an extruder and subjecting the charges to a graft reaction in order to fulfill the first object stated above, the present invention provides a process for producing a silane-modified polyolefin characterized in that the section of a cylinder barrel of a screw extruder extending from a feed zone to the position immediately preceding a plasticizing zone is set at a temperature lower than the boiling point of the vinylsilane compound (hereinafter referred to as the first production process).

In the section of the screw extruder extending from the feed zone to the position immediately preceding the plasticizing zone, it is desired to set the cylinder barrel at a temperature not lower than room temperature to not higher than the boiling point of the vinylsilane compound minus 40° C according to the first production process.

To fulfill the second object described by supplying a vinylsilane compound to a polyolefin in a molten state within a screw extruder and subjecting the compounds to a graft reaction, the present invention provides a process for producing a silane-modified polyolefin characterized in that the vinylsilane compound is supplied to the screw extruder at a position where the molten polyolefin is subjected to a pressure not lower than the saturation vapor pressure of the vinylsilane compound at the temperature of the polyolefin (hereinafter referred to as the second production process).

When a single screw extruder is used for the second production process, the molten polyolefin is subjected to a pressure not lower than the saturation vapor pressure of the vinylsilane compound at the temperature of the polyolefin, for example, by setting the lead and/or groove depth of the screw at a required value, or partially removing the screw flight or forming a cutout in the flight.

When a twin screw extruder is used, the molten polyolefin is subjected to a pressure not lower than the saturated vapor pressure of the vinylsilane compound at the temperature of the polyolefin, for example, by setting the lead and/or groove depth of the screws at a required value, or partially removing the screw flights, or forming a cutout in the flights, or by using kneading elements, reverse screw elements, or seal rings.

Preferably, the vinylsilane compound to be supplied to the extruder is pressurized to a level not lower than the pressure of the molten polyolefin.

To fulfill the foregoing third object, the present invention provides an extruder apparatus having a hopper for charging a material resin therethrough and front and rear two liquid injection ports arranged downstream from the hopper, the extruder apparatus being characterized in that a vent is provided between the front liquid injection port and the rear liquid injection port, the distance between the front liquid injection port and the vent being so determined that the mean residence time of the resin in a molten state therebetween is 15 seconds to 15 minutes (hereinafter referred to as the extruder apparatus of the invention).

Preferably, the extruder apparatus of the invention has a seal portion between the vent and the rear liquid injection port.

Preferably, a front vent is also provided to the front of the front liquid injection port.

Preferably, a seal portion is provided between the front vent and the front liquid injection port.

The invention further provides a process for producing a silane-modified polyolefin characterized in that a polyolefin resin or a resin composition containing the resin is charged into the extruder apparatus described above through the hopper, and melted and kneaded therein while injecting a vinylsilane compound and a radical initiator into the resulting melt through the front liquid injection port, reducing the internal pressure of the extruder apparatus through the vent and further injecting a silanol condensation catalyst through the rear liquid injection port (hereinafter referred to as the third production process).

According to the third production process, the internal pressure may be reduced also through the front vent.

The pressure reduction through the vent is preferably less than 200 mm Hg, more preferably less than 100 mm Hg.

BRIEF DESCRIPTION OF THE DRAWINGS

FIG. 1 is a diagram showing the interior of a common single screw extruder;
FIG. 2 is a side elevation showing the screw of the common single screw extruder;
FIG. 3 is a diagram showing the interior of a common twin screw extruder;
FIG. 4 includes an upper diagram showing an exemplary arrangement of barrel zones of a twin screw extruder for use in the first production process, and a lower diagram showing the configuration of the screw thereof and also the meanings of symbols each representing the screw configuration of each zone;
FIG. 5 includes an upper diagram showing an exemplary arrangement of barrel zones of a twin screw extruder for use in the second production process, and a lower diagram showing the screw configuration thereof;
FIG. 6 includes an upper diagram showing an exemplary arrangement of barrel zones of a conventional extruder, and a lower diagram showing the screw configuration thereof;
FIG. 7 shows the meanings of symbols representing the screw configuration of each zone;
FIG. 8 is a diagram showing an example of extruder apparatus of the invention;
FIG. 9 is a diagram showing another example of extruder apparatus of the invention; and
FIG. 10 is a diagram showing an example of conventional extruder apparatus.

DESCRIPTION OF THE PREFERRED EMBODIMENTS

The polyolefin to be used in the first, second and third production processes (which will collectively be termed "the production process of the invention") is a (co)polymer of olefinic monomer(s), and is not limited specifically. Examples of useful polyolefins are low-density polyethylene, high-density polyethylene, linear low-density polyethylene and like polyethylenes, polypropylene, ethylene-propylene copolymer, ethylenepropylene-diene terpolymer, ethylene-butene copolymer, ethylene-vinyl acetate copolymer, ethylene(meth)acrylic acid ester copolymer, chlorinated polyethylene, etc. One or at least two of these polyolefins are preferable to use. More preferable among these are polyethylenes such as low-density polyethylene, high-density polyethylene and linear low-density polyethylene, and polypropylenes, which are used singly or in the form of a mixture of at least two of them. The term "(co)polymer" as used herein means a "polymer" or "copolymer."

The vinylsilane compound to be used in the production process of the invention is represented by the following general formula (I).

$$RSiR'_nY_{3-n} \qquad\qquad (I)$$

wherein R is an alkenyl group or alkenyloxy group, R' is a hydrogen atom or alkyl group, Y is a hydrolyzable organic group, and n is 0, 1 or 2.

Examples of alkenyl groups represented by R are vinyl, allyl, isopropenyl, butenyl, cyclohexenyl, cyclopentadienyl and the like. Examples of alkenyloxy groups represented by R are vinyloxy, allyloxy and the like.

Examples of hydrolyzable organic groups Y are methoxy, ethoxy, formyloxy, acetoxy, propionyloxy, alkylamino, arylamino and the like. When n is 0 or 1, the groups Y may be the same or different.

Examples of alkyl groups represented by R' are methyl, ethyl, propyl, decyl and the like. When n is 2, the groups R' may be the same or different.

Examples of useful vinylsilane compounds represented by the formula (I) are vinyltrimethoxysilane, vinyltriethoxysilane and vinyltriacetoxysilane when n is 0, vinyldimethoxymethylsilane and vinyldiethoxymethylsilane when n is 1, and vinylmethoxydimethylsilane and vinylethoxydimethylsilane when n is 2. These compounds are favorably usable singly or in combination of at least two of them.

The amount of vinylsilane compound to be used is not limited specifically, whereas if the amount is insufficient, the water-crosslinked polyolefin eventually obtained will not be sufficiently high in gel fraction, failing to exhibit satisfactory improvements in characteristics such as mechanical strength, heat resistance and creep resistance. Conversely use of an excessive amount results in a lower elongation and fusibility, entailing seriously impaired extrudability and increasing the likelihood of the vinylsilane compound remaining unreacted in the system. Accordingly, the vinylsilane compound is used preferably in an amount of 0.5 to 10 parts by weight, more preferably 0.7 to 5 parts by weight, per 100 parts by weight of the polyolefin.

A radical initiator is used in the production process of the invention for the reaction of grafting the vinylsilane compound to the polyolefin. The radical initiator may be any of the compounds generally used for the graft reaction of polyolefins. Examples of such compounds are benzoyl peroxide, 2,4-dichlorobenzoyl peroxide, tert-butyl peroxyacetate, tert-butyl peroxybenzoate, dicumyl peroxide, 2,5-dimethyl-2,5-di(tert-butylperoxy)hexane, di-tert-butyl peroxide, 2,5-dimethyl-2,5-di(tert-butylperoxy)hexyne-3 and like organic peroxides, azobisisobutyronitrile, dimethylazodiisobutyrate and like azo compounds, etc. These compounds are favorably used singly or in combination of at least two of them. More preferable to use singly or in combination of at least two are dicumyl peroxide, 2,5-dimethyl-2,5-di(tert-butylperoxy)hexane, di-tert-butyl peroxide and 2,5-dimethyl-2,5-di(tert-butylperoxy)hexyne-3.

Although the amount of radical initiator to be used in the production process of the invention is not limited particularly, the amount is preferably 0.01 to 5 parts by weight, more preferably 0.02 to 2 parts by weight, per 100 parts by weight of the polyolefin.

If the radical initiator is used in an insufficient amount, the graft reaction will not proceed satisfactorily, failing to achieve the desired gel fraction. Conversely, use of an excess of the initiator gives the polyolefin too many free radical sites to permit progress of peroxide crosslinking, resulting in impaired surface smoothness, an abnormally increased viscosity and lower work efficiency.

When required, the silane-modified polyolefin may have incorporated therein one or at least two of silanol condensation catalysts, thermal stabilizers for processing, other antioxidants, ultraviolet absorbers, organic and inorganic fillers, pigments, dyes, assisting agents for processing and like additives.

The silanol condensation catalyst can be any of the compounds which are generally used as catalysts for accelerating dehydration condensation between silanol molecules. Examples of such catalysts are dibutyltin dilaurate, dibutyltin diacetate, dibutyltin dioctoate, stannous acetate, cobalt naphthenate, lead naphthenate, ethylamine, dibutylamine, hexylamine, pyridine and like compounds, sulfuric acid, hydrochloric acid and like inorganic acids, toluenesulfonic acid, acetic acid, stearic acid, maleic acid and like organic acids, etc. One or at least two of these compounds are suitable to use. Among these, dibutyltin dilaurate is more suitable to use.

Examples of suitable ultraviolet absorbers are benzotriazole compounds such as 2-(5-methyl-2-hydroxyphenyl)benzotriazole, 2-{2-hydroxy-3,5-bis(a,a-dimethylbenzyl)phenyl}-2H-benzotriazole, 2-(3-tert-butyl-5-methyl-2-hydroxyphenyl)-5-chlorobenzotriazole, and 2-(3,5-di-tert butyl-2-hydroxyphenyl)-5-chlorobenzotriazole.

The extruder to be used for the production process of the invention is a screw extruder in common use for extruding plastics and is not limited specifically. Examples of suitable extruders are single screw extruders, twin screw extruders and multi-screw extruders having at least three screws.

Examples of single screw extruders usable are those having a common full-flight screw and further include those having a screw with a discontinuous flight, pin barrel and mixing head. Examples of twin screw extruders which are suitable to use are those having intermeshing co-rotating screws or counter rotating screws and those having non-intermeshing counter screws.

Among these screw extruders, more suitable to use in view of the mixing performance are twin screw extruders having intermeshing (self-wiping) co-rotating screws. The extruders of this type generally have screws with two or three full flights and locally include kneading disks, seal rings, reverse screws, rotors and like screw elements.

The silane-modified polyolefin extrudate prepared by the production process of the invention and forced out from the extruder outlet may be pelletized and thereafter extruded again to a desired shape. Alternatively, the silane-modified polyolefin prepared can be shaped by a method other than extrusion, such as blowing, calendering or injection molding. Further alternatively, a die may be attached to the downstream end of the extruder to form the silane-modified polyolefin directly to a desired shape. The shaped silane-modified polyolefin can be brought into contact with water for water crosslinking, for example, by the high-temperature hydrothermal process or immersion process.

First, a detailed description will be given of the first production process.

The first production process is characterized in that the section of the cylinder barrel of the screw extruder extending from a feed zone to the position immediately preceding a plasticizing zone is set at a temperature lower than the boiling point of the vinylsilane compound, preferably at a temperature not lower than room temperature to not higher than the boiling point of the vinylsilane compound minus 40° C.

According to the first production process, the polyolefin, vinylsilane compound and radical polymerization initiator are charged into the extruder by a desired method. For example, these compounds are charged in individually. Alternatively, the radical initiator is dissolved in the vinylsilane compound to prepare a liquid composition first, and the polyolefin is then impregnated with the composition and thereafter placed in, or the polyolefin and the liquid composition are placed in individually.

As to the boiling point of vinylsilane compounds, vinyltrimethoxysilane and vinyltriethoxysilane, for example, are 123° C and 161° C, respectively, in boiling point. The extrusion temperature for polyolefins is, for example, 165 to 260° C for high-density polyethylene, 130 to 230° C for low-density polyethylene and 205 to 260° C for polypropylene. Accordingly, the boiling point of these vinylsilane compounds is lower than the extrusion temperatures of the polyolefins. When the polyolefin is heated to the extrusion temperature in the plasticizing zone of the extruder as used for the conventional process, the vinylsilane compound therefore vaporizes, reversely flowing through the feed inlet to become released from the extruder via the feed inlet.

In the section of the extruder extending from its feed zone to the position immediately preceding the plasticizing zone thereof, the cylinder barrel temperature set for the first production process is lower than the boiling point of the vinylsilane compound. For example, the temperature is lower than 123° C when vinyltrimethoxysilane is used, and lower than 161° C when vinyltriethoxysilane is used, so that the process is free of the above problem of vaporization and reverse flow of the vinylsilane compound,

The lower limit of the cylinder barrel set temperature in the extruder section extending from the feed zone to the position immediately preceding the plasticizing zone is preferably room temperature although not limited specifically. If the temperature set for the section is too low, the screw will be heavily loaded in a downstream plasticizing zone. Such low temperatures are accordingly undesirable.

The feed zone of the extruder is a zone having an opening for guiding therethrough the polyolefin into the extruder. The plasticizing zone is a zone wherein the polyolefin is melted inside the extruder.

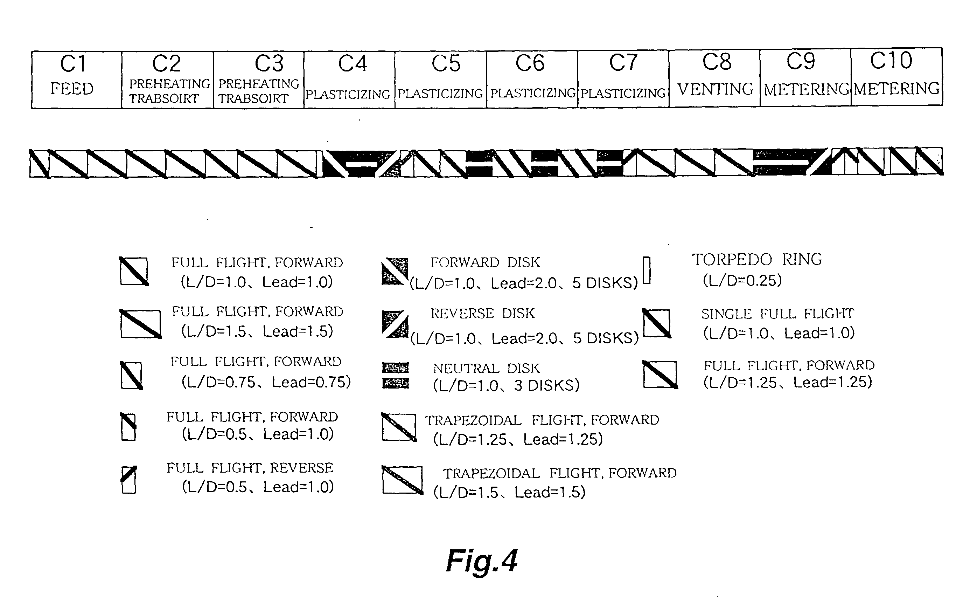

With reference to FIG. 4, extruders generally comprise zones having different functions such as feed, preheating-transport, plasticizing, venting and metering as arranged downstream from the upstream end of the cylinder. The expression "the section of the cylinder barrel of the screw extruder extending from a feed zone to the position immediately preceding a plasticizing zone" as used in describing the first production process refers to the section from a feed zone C1 to preheating-transport zones C2, C3 in the arrangement of FIG. 4.

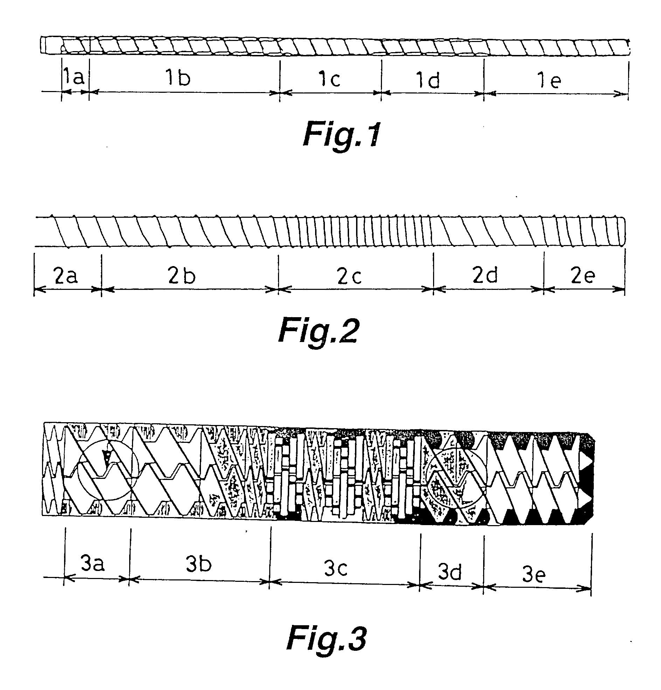

The extruder are divided into such zones according to the screw pumping efficiency, which is dependent on the extruder screw configuration. With reference to FIG. 1 showing a single screw extruder, the extruder comprises zones arranged downstream from the upstream end of the cylinder, i.e., a feed zone la immediately below a hopper, a preheating-transport zone 1b in which the screw groove has a predetermined definite depth, a plasticizing zone 1c having a smaller screw groove depth than the zone 1b, a venting zone 1d having a greater screw groove depth in the case where venting is needed, and a metering zone le extending toward the cylinder downstream end.

In connection with the screw pumping efficiency, varying the groove depth of the screw is equivalent to varying the lead of the screw, so that the constituent zones of the single screw extruder can be made to have different functions by altering the screw configuration, that is, the lead of the screw. For example, FIG. 2 shows zones arranged downstream from the cylinder upstream end, namely, a feed zone 2a, a preheating-transport zone 2b, a plasticizing zone 2c having a smaller lead than the zones 2a, 2b, a venting zone 2d having a great lead again, and a metering zone 2e having a slightly smaller lead than the zone 2d. The plasticizing zone 2c may be provided with a discontinuous flight or rotor to give a flow resistance (barrier effect).

FIG. 3 shows an example of twin screw extruder, which comprises a feed zone 3a immediately below a hopper, a preheating-transport zone 3b with full flight screws, a plasticizing zone 3c wherein first kneading disks are provided, a venting zone 3d with full flight screws again when so required, and the following metering zone 3e, the zones being arranged downstream from the cylinder upstream end.

The arrangements of screw configurations of single screw and twin screw extruders described are intended for illustrative purposes only and are in no way limitative.

In the extruders described above, the section for which the cylinder barrel temperature is to be set at a predetermined value for use in the first production process means the extruder section extending from the feed zone to which polyolefin is supplied to the position immediately preceding the plasticizing zone in which the polyolefin is melted.

The extruder operating conditions for the graft reaction, e.g., the number of revolutions of the screw, the rate of extrusion and the cylinder barrel set temperature for the zones downstream from the plasticizing zone, are not limited specifically but can be determined suitably in view of the residence time within the extruder, degree of kneading, strength of the extrudate to be obtained, etc.

The silane-modified polyolefin delivered from the extruder outlet may be pelletized and thereafter extruded again to a desired shape, but can alternatively be shaped by a method other than extrusion, such as blowing, calendering or injection molding. Further alternatively, a die of desired configuration may be attached to the extruder end to form the silane-modified polyolefin to the desired shape.

The shaped silane-modified polyolefin can be crosslinked with water by being brought into contact with water. The shaped product is water-crosslinked, for example, by being treated with hot water having a high temperature or immersed in hot water for a specified period of time.

According to the first production process, the cylinder barrel temperature set for the extruder section extending from its feed zone to the position immediately preceding the plasticizing zone thereof is lower than the boiling point of the vinylsilane compound, so that the vinylsilane compound, when vaporized, is liquefied on condensation while reversely flowing in the section, sent downstream of the extruder again along with the solid phase of polyolefin, eventually mixed with the polyolefin in a molten state and consumed by graft reaction. The process therefore assures a stabilized efficient graft reaction.

Thus, the first production process suppresses the vaporization of the silane, permitting the silane to participate in the graft reaction at a constant rate with time and consequently making it possible to give a water-crosslinked silane-modified polyolefin having a stabilized degree of crosslinking (gel fraction).

With the silane inhibited from escaping from the system, the material can be used with an improved efficiency to achieve a satisfactory degree of crosslinking even when used in a reduced amount.

The second production process will be described next.

In supplying a vinyl silane compound to a polyolefin in a molten state within a screw extruder and subjecting the compounds to a graft reaction according to the second production process, the vinylsilane compound is supplied to the screw extruder at a position where the molten polyolefin is subjected to a pressure not lower than the saturation vapor pressure of the vinylsilane compound at the temperature of the polyolefin.

The term "a polyolefin in a molten state" means the polyolefin as melted substantially completely and made flowable in the interior of the extruder. The resin temperature is, for example, at least $120°$ C in the case of low-density polyethylenes in common use and at least $135°$ C in the case of high-density polyethylenes.

Further the term "the saturated vapor pressure of the vinylsilane compound" refers to the pressure of the vapor thereof which is present in equilibrium with the liquid of vinylsilane compound to be used for the graft reaction. Generally, the relationship between the saturated vapor pressure and the temperature is expressed by an empirical equation called Antoine's equation. For example, the value of saturated vapor pressure P (mm Hg) of trimethoxyvinylsilane is expressed by the following equation.

$$\log_{10} P = 7.843 + (-1751.65)/(230 + T)$$

Accordingly, the expression "the molten polyolefin is subjected to a pressure not lower than the saturation vapor pressure of the vinylsilane compound at the temperature of the polyolefin" as used in describing the second production process means that for example in the case where the vinylsilane compound is trimethoxyvinylsilane, a pressure of at least 5880 mm Hg (7.99 kgf/cm$^2$) is applied to the polyolefin in a molten state at $200°$ C.

To subject polyolefins in a molten state in the interior of screw extruders to a desired pressure, it is usual practice to adjust the screw pumping efficiency, for example, to adjust the screw rotation speed and/or the screw configuration. In the case of single screw extruders, this can be accomplished by adjusting the lead and/or the groove depth of the screw to a suitable value. The pressure is also adjustable by locally removing the screw flight to give a backflow. In the case of twin screw extruders, basically the same method as applied to single screw extruders is used, whereas the resin pressure is adjustable also by adding elements such as a kneading screw, screw of reverse lead and seal ring. The methods of adjusting the screw configuration described can be practiced readily with reference to screw characteristic curves representing the relationship between the flow rate and the pressure difference.

Although the method of supplying the silane compound is not limited specifically according to the second production process, the pressure of the polyolefin in a molten state is not lower than the vapor pressure of the vinylsilane compound, so that the vinylsilane compound to be supplied to the extruder is pressurized to a level not lower than this pressure. For this purpose, it is desirable to use a pump adapted to feed a liquid at a low rate, e.g., a plunger pump.

In the case where the vinylsilane compound is injected into the extruder cylinder at the desired position where a suitable pressure is applied to the molten polyolefin by the foregoing method, it is also effective that the injection port is provided with a nozzle or a check valve.

Insofar as the requirements as to the resin temperature and pressure in the reaction zone are fulfilled according to the second production process, the extruder operating conditions for the graft reaction, such as the number of revolutions of the screw, the rate of extrusion and the temperatures of the cylinder barrel and the die to be set, are not limited but may be suitably determined in view of the resin residence time, thermal stability and parison strength of the extrudate.

The second production process effectively eliminates scorching although the reason still remains to be fully clarified. This advantage is attributable presumably to the following. The vinylsilane compound to be supplied to the extruder is pressurized to a level not lower than the vapor pressure thereof, therefore does not vaporizes even at a temperature not lower than its boiling point but rapidly reacts with the molten polyolefin by being mixed therewith. This eliminates the possibility that the silane compound will come into direct contact with the barrel inner wall and the screw surface inside the extruder, consequently reducing the likelihood of the vinylsilane compound remaining within the extruder for a prolonged period of time to form an accumulation of condensate and eventually egress in the form of scorches.

Thus, the second production process inhibits scorching in the step of modifying polyolefin with a silane, ensuring a stabilized operation for a prolonged period of time for the production of silane-modified polyolefin.

A description will be given of an extruder apparatus embodying the invention and the third production process wherein the apparatus is used.

The extruder apparatus of the invention has a hopper for charging a material resin therethrough and front and rear two liquid injection ports arranged downstream from the hopper, the extruder apparatus being characterized in that a vent 5 is provided between the front liquid injection port and the rear liquid injection port, the distance between the front liquid injection port and the vent being so determined that the resin in a molten state remains therebetween for 15 seconds to 15 minutes.

The third production process uses the extruder apparatus thus constructed and is characterized in that a polyolefin resin or a resin composition containing the resin is charged into the extruder apparatus through the hopper, and melted and kneaded therein while injecting a vinylsilane compound and a radical initiator into the resulting melt through the front liquid injection port, reducing the internal pressure of the extruder apparatus through the vent and further injecting a silanol condensation catalyst through the rear liquid injection port.

With the extruder apparatus of the invention, the cylinder has a front liquid injection port, a vent and a rear liquid injection port which are arranged in this order from the hopper toward the direction of extrusion.

The distance between the front liquid injection port and the vent is such that the mean residence time of the resin in a molten state therebetween is preferably 15 seconds to 15 minutes, more preferably 30 seconds to 7 minutes. The term "mean residence time" as used herein refers to 50% mean of the distribution function obtained by determining a residence time distribution. The distribution function of residence residence times can be determined by the following procedure using an extruder apparatus of the same type as above which is formed with a molten resin outlet in the bottom of the barrel zone having the vent. First, an organic dye is injected into the cylinder barrel in a moment, and a molten resin forced out through the resin outlet upon injection is continuously taken out. The sample thus obtained in an elongated form is then cut at a constant interval into lengths. The dye concentration of the lengths of sample is quantitatively determined as by light absorption analysis, and the values are successively plotted to obtain the residence time distribution function.

If the mean residence time is shorter than 15 seconds, a greatly reduced degree of conversion is likely to result, whereas if the mean residence time is conversely longer than 15 minutes, it is likely that the resin will become colored owing to thermal degradation or develop other faults. In actuality, the proper length of time varies with the kinds of polyolefin, vinylsilane compound and radical initiator and the extruder operating conditions, so that the distance between the front liquid injection port and the vent is determined within the foregoing range for every particular reaction system.

Although the distance between the vent and the rear liquid injection port is not limited, it is desired to provide a seal portion between the vent and the rear injection port so that the liquid injected through the rear port will not be drawn off by suction via the preceding vent.

The pressure reduction through the vent is preferably less than 200 mm Hg, more preferably less than 100 mm Hg. An insufficient pressure reduction involves the likelihood that the unreacted liquid and water will not be volatilized enough.

Preferably, the extruder apparatus of the invention has another vent to the front of the front liquid injection port. The front vent then permits removal of the water present in the material polyolefin and also renders the molten resin free from oxygen acting to inhibit the graft reaction, thereby contributing to an improved degree of graft conversion. Although the distance between the front vent and the front liquid injection port is not limited specifically, it is desirable to provide a seal portion between the front vent and the front injection port so that the liquid injected through the front port will not be drawn off by suction through the front vent.

According to the third production process which is practiced using the extruder apparatus of the foregoing construction, a polyolefin resin or a composition comprising the resin is charged into the apparatus through the hopper, melted and mixed, and a liquid composition prepared in advance by dissolving a radical initiator in a vinylsilane compound is then injected through the front liquid injection port using a liquid pump. After further melting and mixing, water and an unreacted portion of the vinylsilane compound are drawn off by suction through the vent, and a silanol condensation catalyst is subsequently injected through the rear liquid injection port using a liquid pump.

The silanol condensation catalysts previously exemplified are usable.

The silanol condensation catalyst is used preferably in an amount of 0.001 to 5 parts by weight, more preferably 0.005 to 1 part by weight, per 100 parts by weight of the polyolefin.

The catalyst, when used in an insufficient amount, fails to fully perform its function, requiring a longer period of time for the crosslinking step, whereas conversely an excess of the catalyst causes early crosslinking within the extruder, permitting scorching.

With the extruder apparatus and the third production process of the invention, water responsible for scorching and unreacted vinylsilane compound contributing to the formation of vitreous Condensate can be efficiently volatilized and drawn off by suction through the vent 5 disposed between the front liquid injection port 4 and the rear liquid injection port 6. A silane-modified polyolefin extrudate having a good appearance and excellent quality and characteristics can therefore be provided, with scorching and formation of self condensate of the vinylsilane compound inhibited.

The present invention will be described in greater detail with reference to the following examples.

Example 1 (First Production Process)

To 10 kg of vinyltrimethoxysilane (brand name "Sila-ace S210," product of Chisso Corporation) was added 800 g of 2,5-dimethyl-2,5-di(tert-butylperoxy) haxane (brand name "Perhexa 25B," product of Nippon Oils & Fats Co., Ltd.) to prepare a solution for use as a liquid composition.

A twin screw extruder (Model "TEX-44," product of Japan Steel Works, Ltd.) was used which comprises intermeshing co-rotating screws (diameter 47 mm, L/D=35) and a cylinder barrel housing the screws, the screws each comprising a self-wiping double-flighted screw element and kneading disk elements. The extruder has a strand die attached to the downstream end thereof and formed with five bores with a diameter of 3 mm.

As shown in FIG. 4, the extruder consists of a first division to a tenth division arranged downstream from the upstream side, and the screws are so shaped that the first division serves as a feed zone C1, the second and third divisions as preheating-transport zones C2, C3, the fourth to seventh divisions as plasticizing zones C4, C5, C6, C7, the eighth division as a venting zone C8 and the ninth and tenth divisions as metering zones C9, C10. FIG. 4 shows symbols each representing the screw configuration of the zone, and the meaning of the symbol.

The barrel set temperature for the zones was room temperature for the feed zone C1, 80° C for the preheating-transport zones C2, C3, 140° C for the plasticizing zones C4, C5, and 200° C for the plasticizing zones C6, C7, venting zone C8 and metering zones C9, C10. The strand die was set at 200° C.

A high-density polyethylene (brand name "Hi-zex 2200J," product of Mitsui Petrochemical Industries, Ltd.) was placed into the hopper and supplied from the feed inlet to the feed zone C1 at a rate of 50 kg/hour using a screw feeder.

At the same time, the liquid composition was supplied from the same feed inlet to the feed zone C1 at a rate of 540 g/hour using a micropump ("VC-102 MODEL 186-346," product of Chuo Rika Co., Ltd.).

The extruder was operated at a screw speed of 100 r.p.m., discharging from the die an extrudate of silane-modified polyethylene, which was cut into lengths of about 5 mm by a pelletizer while being forcibly cooled in a cold air stream, whereby pellets were obtained.

After the extruder thus operated was brought to a steady state, the operation was continued for 12 hours. During this period, pellets of silane-modified polyethylene were sampled at an interval of 1 hour, and the samples were heat-treated in water vapor at 110ª C for water crosslinking. In this way, pellets of water-crosslinked silane-modified polyethylene were prepared.

Example 2 (First Production Process)

A liquid composition was prepared in the same manner as in Example 1.

A pipe forming die, 21.5 mm in outside diameter and 16.2 mm in inside diameter, was connected to the downstream end of a twin screw extruder of the same type as used in Example 1. The barrel set temperature for the respective zones was room temperature for the feed zone C1, 50° C for the preheating-transport zones C2, C3, 180° C for the plasticizing zones C4, C5, C6, C7 and 150° C for the venting zone C8 and metering zones C9, C10. The die was set at 150° C.

A high-density polyethylene (brand name " 2200J," product of Mitsui Petrochemical Industries, Ltd.) was placed into the hopper and supplied from the feed inlet to the feed zone C1 at a rate of 20 kg/hour using a screw feeder.

At the same time, the liquid composition was supplied from the same feed inlet to the feed zone C1 at a rate of 216 g/hour using a micropump.

A solution containing di-n-butyltin dilaurate serving as a silanol condensation catalyst was supplied at a rate of 8 g/hour using a plunger pump and introduced into the metering zone C9 of the extruder by way of an injection nozzle. In the meantime the extruder was operated at a screw speed of 40 r.p.m., discharging from the pipe die an extrudate of silane-modified polyethylene in the form of a pipe. The same procedure as in Example 1 thereafter followed to obtain a water-crosslinked polyethylene extrudate in the form of a pipe. The pipe obtained was heat-treated in water vapor at 110° C for 4 hours for water crosslinking, affording a pipe of water-crosslinked silane-modified polyethylene.

Comparative Example 1

Pellets of water-crosslinked silane-modified polyethylene were prepared in the same manner as in Example 1 except that the set temperature for the preheating-transport zones C2, C3 was 140° C.

Property Evaluation Test

The pellets of water-crosslinked silane-modified polyethylene obtained in Example 1, the pipelike extrudate of water-crosslinked polyethylene obtained in Example 2 and the pellets of water-crosslinked silane-modified polyethylene prepared in Comparative Example 1 were checked for gel fraction according to JIS K6769, and the mean gel fraction standard deviations for 12 hours were calculated. Table 1 shows the values obtained.

Table 1

| | Example 1 | Example 2 | Comp. Ex. 1 |
|---|---|---|---|
| Barrel set temp. | | | |
| Feed zone | RT* | RT* | RT* |
| Preheating-transport zones | 80 | 50 | 140 |
| Plasticizing zones | 140-200 | 180 | 140-200 |
| Venting zone | 200 | 150 | 200 |
| Metering zones | 200 | 150 | 200 |
| Die | 200 | 150 | 200 |
| Mean gel fraction | 75% | 76% | 47% |
| Gel fraction standard deviation | 1.5% | 2.5% | 20% |

\* RT is room temperature: 25-30° C

The table reveals that the gel fraction was stable during the 12-hour continuous operation in Examples 1 and 2 wherein the barrel set temperature for the preheating-transport zones C2, C3 was below the boiling point (123° C) of vinyltrimethoxysilane, whereas the gel fraction varied greatly during the continuous operation in Comparative Example 1 wherein the barrel set temperature for the preheating-transport zones C2, C3 was 140° C, that is, above the boiling point.

Example 3 (Second Production Process)

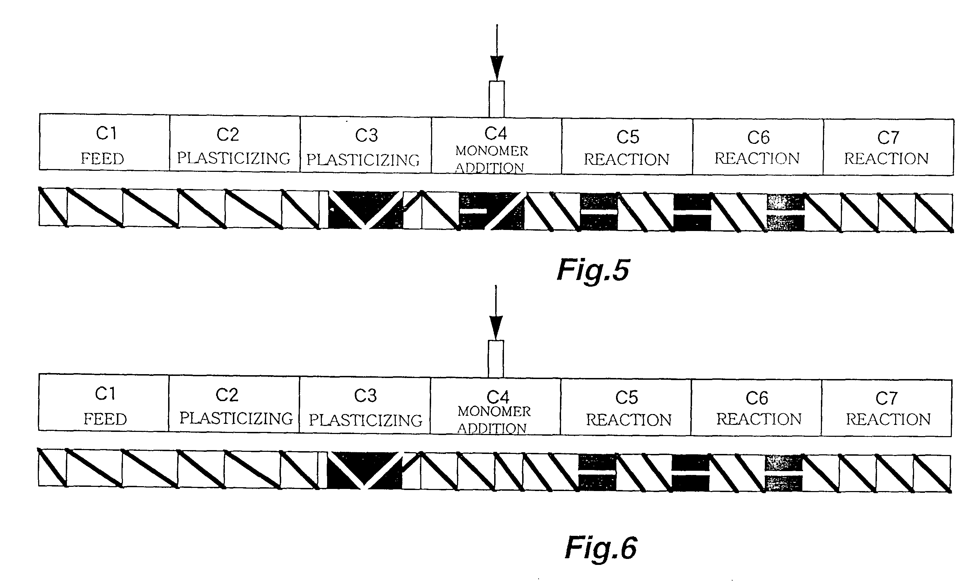

First, the construction of the extruder used will be described with reference to FIG. 5.

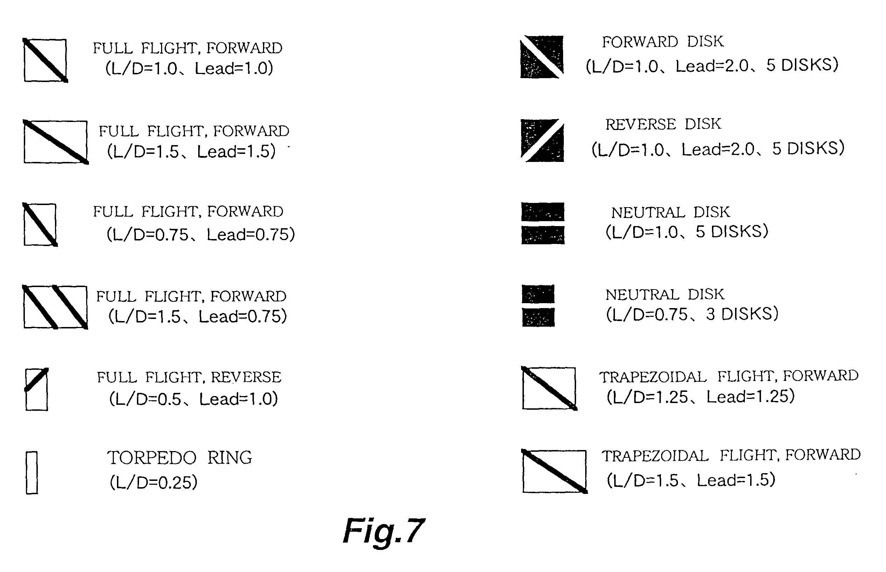

The extruder shown in FIG. 5 is a twin screw extruder (Model "TEX-44," product of Japan Steel Works, Ltd.) which comprises intermeshing co-rotating screws (diameter 47 mm, L/D=24.5) and a cylinder barrel having seven divisions, the screws each comprising a self-wiping double-flighted screw element and kneading disk elements. The extruder has attached to its downstream end a die for forming a flat plate, 85 mm in width and 3 mm in thickness. The cylinder barrel with the seven divisions comprises a first barrel division C1 to a seventh barrel division C7 as arranged downstream, and the screws are so shaped that as shown in the lower diagram of FIG. 5, the first barrel division C1 serves as a feed zone, the second and third divisions C2, C3 as plasticizing zones, the fourth barrel division C4 as a monomer injecting zone, and the fifth, sixth and seventh barrel divisions C5, C6, C7 as reaction zones. FIG. 7 shows symbols each representing the screw configuration of the zone, and the meaning of the symbol. The barrel set temperature for the zones was room temperature for the first barrel zone, 80° C for the second barrel zone, 160° C for the third and fourth zones and 190° C for the fifth to seventh zones. The die was set at 190° C. The fourth barrel division had a port in the center of its top and a resin pressure gauge (Model "CZ-100P," product of Rikagaku Kogyo Co., Ltd.) fitted in the port for providing resin pressure readings via an output converter (Model "CT-300," product of Rikagaku Kogyo Co., Ltd.). A thermocouple (Model "JIS-K," product of Rikagaku Kogyo Co., Ltd.) for resins was installed in the center of bottom of the same barrel division for directly providing resin temperature readings.

A high-density polyethylene (brand name "Hi-zex," product of Mitsui Petrochemical Industries, Ltd.) was supplied to the feed zone of the extruder having the foregoing construction at a rate of 30 kg/hour using a screw feeder. The fourth barrel division exhibited a resin pressure of 22 kgf/cm$^2$ and a resin temperature of 197° C. With the extrusion operation then interrupted, the pressure gauge on the fourth barrel division was replaced by a liquid addition nozzle (product of Japan Steel Works, Ltd.).

On the other hand, 8 parts by weight of 2,5-dimethyl-2,5-di(tert-butylperoxy)hexane (brand name "Perhexa 25B," product of Nippon Oils & Fats Co., Ltd.) serving as a radical initiator was dissolved in 100 parts by weight of a vinylsilane compound, i.e., vinyltrimethoxysilane (brand name "Sila-ace S210," product of Chisso Corporation, vapor pressure at 197° C: 7.48 kgf/cm$^2$) to obtain a monomer solution. The solution was sent to the liquid addition nozzle at a flow rate of 300 g/hour using a compact double plunger pump (Model "WORK-21 MP-312," product of Labo-Quatec Co., Ltd.) provided with a pressure indicator, and was supplied to the extruder which resumed the operation of extruding polyethylene.

A steady-stated graft reaction-extrusion operation thereafter continuously followed for 72 hours. During this period, the surface of the silane-modified polyethylene extrudate discharged from the die was visually observed, but none of faults such as scorches were found. A portion of the extrudate was sampled 72 hours later, then allowed to stand for 24 hours in a curing device with water vapor circulating therethrough at 110° C for water crosslinking and thereafter checked for gel fraction according to JIS K6769. The value was 83.2 wt. %.

Examlple 4 (Second Production Process)

The same operation as in Example 3 was carried out with the exception of supplying the polyethylene at a rate of 50 kg/hour and the monomer solution at a rate of 500 g/hour. When checked before the operation, the fourth barrel division was found to have a resin pressure of 27 kgf/cm$^2$ and a resin temperature of 203° C (the vapor pressure of vinyltrimethoxysilane at 203° C: 8.53 kgf/cm$^2$). None of faults such as scorches were found on the surface of the silane-modified polyethylene extrudate continuously delivered for 72 hours. The sample obtained 72 hours later was found to be 80.9 wt. % in gel fraction.

Comparative Example 2

The same operation as in Example 3 was conducted except that the screws used had the configurations illustrated in the lower diagram of FIG. 6. When checked before the operation, the fourth barrel division was found to have a resin pressure of 1 kgf/cm$^2$ and a resin temperature of 202° C (the vapor pressure of vinyltrimethoxysilane at 202° C: 8.34 kgf/cm$^2$). When the extruder was continuously operated in a steady state for graft reaction-extrusion, a colored condensation product began to appear on the surface of the silane-modified polyethylene extrudate delivered about 31 hours after the start-up, and the colored condensation product thereafter continued to increase in quantity, rendering the surface seriously degraded 33 hours after the start-up, so that the operation was discontinued. The polyethylene sampled at this time was 82.0 wt. % in gel fraction.

Thus, the production process of Examples 3 and 4 afforded satisfactory silane-modified polyethylene extrudates exhibiting a high gel fraction on curing and free from scorching, whereas the silane-modified polyethylene extrudate obtained by the production process of Comparative Example 2 permitted formation of a large quantity of colored condensate when the process was practiced continuously for more than 24 hours although the modified polyethylene had a high gel fraction.

Example 5

(Extruder Apparatus of the Invention and Third Production Process)

First, the construction of the extruder used will be described with reference to FIG. 8.

The extruder 3 shown in FIG. 8 is a twin screw extruder (Model "TEX-44," product of Japan Steel Works, Ltd.) which comprises intermeshing co-rotating screws (diameter 47 mm, L/D=45) and a cylinder barrel having twelve divisions, the screws each comprising a self-wiping double-flighted screw element and kneading disk elements. The extruder has attached to its downstream end a die 11 for forming a pipe, 21.5 mm in inside diameter and 16.2 mm in outside diameter. The cylinder barrel with the twelve divisions comprises a first barrel division to a twelfth barrel division as arranged downstream, and has a front liquid injection port 4 in the fifth barrel division, a vent 5 in the ninth barrel division and a rear liquid injection port 6 in the tenth barrel division. The barrel division set temperature was 170° C for the first to fourth barrel divisions, and 150° C for the fifth to twelfth barrel divisions. The pipe die was set at 150° C.

FIG. 8 shows a hopper 1, screw feeder 2, vacuum pump 7, liquid feed pumps 8, 18, tank 9 for a mixture of vinylsilane compound and radical initiator, silanol condensation catalyst tank 10 and pipelike extrudate 12 of silane-modified polyolefin.

Next, a description will be given of a process for producing a silane-modified polyolefin with use of the extruder of the above construction.

First, 4 parts by weight of 2,5-dimethyl-2,5-di(tert-butylperoxy)hexane (brand name "Perhexa 25B," product of Nippon Oils & Fats Co., Ltd.) serving as a radical initiator was dissolved in 100 parts by weight of a vinylsilane compound, i.e., vinyltrimethoxysilane (brand name "Sila-ace S210," product of Chisso Corporation), to prepare a liquid composition A.

A straight-chain low-density polyethylene (brand name "Linelex AR4810," product of Nippon Petrochemical Co., Ltd.) was charged into the hopper 1 and supplied from the feed inlet to a feed zone C1 at a rate of 30 kg/hour using the screw feeder 2. The screws of the extruder were driven at a speed of 80 r.p.m. The liquid composition A was injected into the cylinder barrel via the front liquid injection port 4 at a feed rate of 300 g/hour using the liquid feed pump 8, i.e., a micropump ("VC-102 MODEL 186-346," product of Chuorika Co., Ltd.). Further a silanol condensation catalyst, i.e., di-n-butyltin dilaurate (product of Wako Junyaku Kogyo Co., Ltd.), was injected via the rear liquid injection port 6 at a feed rate of 12 g/hour using a chemical minipump (Model "NP-FX-1," product of Nippon Seimitsu Kagaku Co., Ltd.) serving as the liquid feed pump 18. The vacuum pump 7 was operated for the vent 5 to reduce a pressure to 10 mm Hg. The extruder, melting and kneading the resin therein, delivered from the pipe die 11 a silane-modified polyethylene extrudate 12 in the form of a pipe as a product.

The pipe extrusion operation was continued for 72 hours, and the extrudate obtained upon lapse of 72 hours was checked with the eye for scorching and adhesion of condensate for evaluation. Table 1 shows the result of evaluation. As to the criteria for distinguishing scorching and the adhesion of condensate, the extrudate was judged to have a scorch if a transparent globular gel was found, and a colored vitrous solid, if found, was construed as indicating the adhesion of condensate, when the surface of the extrudate discharged from the extruder was observed with the eye.

The pipelike extrudate 12 was brought into contact with water to obtain a pipe of water-crosslinked silane-modified polyethylene, which was then cut to a length of 2 cm. The cut piece of pipe was washed with a solution of 5 wt. % of sodium hydroxide in methanol under reflux and thereafter heated as placed in a crucible within a muffle furnace at 550° C for about 5 hours. The amount in the number of parts by weigt of the grafted vinylsilane compound was calculated from the weight of the remaining $SiO_2$ and divided by the amount in the number of parts by weight of the vinylsilane compound injected into the extruder to determine the graft conversion (%). Table 2 shows the graft conversion thus obtained.

The barrel division formed with the vent 5 was replaced by a division having a resin outlet in its bottom, and an organic dye was momentarily injected into the extruder through the front liquid injection port 4, whereupon the molten resin discharged from the resin outlet was taken out for the following 3 minutes. The elongated sample obtained was divided into 18 equal portions, the dye concentration of the divided portions was quantitatively determined by light absorption analysis, and the values were successively plotted to determine a residence time distribution function. Table 2 shows 50% mean of the resulting distribution function as a mean residence time.

Example 6

(Extruder Apparatus of the Invention and Third Production Process)

The same extruder as used in Example 5 was used except that a vent 15 was formed also in the fourth barrel division in addition to the vent 5 of the ninth barrel division as shown in FIG. 9 to effect a pressure reduction of 10 mm Hg and prepare a pipe of water-crosslinked silane-modified polyethylene, which was similarly checked for evaluation. Table 2 shows the result of evaluation. Indicated at 17 in FIG. 9 is a vacuum pump.

Example 7

(Extruder Apparatus of the Invention and Third Production Process)

A pipe of water-crosslinked polyethylene was prepared in the same manner as in Example 5 except that a pressure reduction of 150 mm Hg was effected by the vent 5, and was similarly checked for evaluation. Table 2 shows the result of evaluation.

Example 8

(Extruder Apparatus of the Invention and Third Production Process)

A pipe of water-crosslinked polyethylene was prepared in the same manner as in Example 5 except that a pressure reduction of 300 mm Hg was effected by the vent 5, and was similarly checked for evaluation. Table 2 shows the result of evaluation.

Example 9

(Extruder Apparatus of the Invention and Third Production Process)

A pipe of water-crosslinked polyethylene was prepared in the same manner as in Example 5 except that the vent 5 of the ninth barrel division was shifted to the seventh barrel, and was similarly checked for evaluation. Table 2 shows the result of evaluation.

Comparative Example 3

A pipe of water-crosslinked polyethylene was prepared in the same manner as in Example 5 except that the vent 5 of the ninth barrel division was shifted to the sixth barrel division, and was similarly checked for evaluation. Table 2 shows the result of evaluation.

Comparative Example 4

A pipe of water-crosslinked polyethylene was prepared in the same manner as in Example 5 except that no vent 5 was provided in the barrel as shown in FIG. 10, and was similarly checked for evaluation. Table 2 shows the result of evaluation.

The mean residence time in this operation corresponded to the mean residence time from the front liquid injection port 4 to the ninth barrel division.

Table 2

| | Example | | | | | Comp. Ex | |
|---|---|---|---|---|---|---|---|
| | 5 | 6 | 7 | 8 | 9 | 3 | 4 |
| Number of vents | 1 | 2 | 1 | 1 | 1 | 1 | 0 |
| Pressure of the vents (mm Hg) | 10 | 10 | 150 | 300 | 10 | 10 | – |
| Mean residence time from front port to vent (sec) | 70 | 70 | 70 | 70 | 28 | 13 | 70 |
| Graft conversion (%) | 86 | 92 | 87 | 88 | 70 | 58 | 89 |
| Scorching | No | No | Slight | Some | No | No | Much |
| Adhesion of condensate | No | No | Slight | Some | No | Some | Much |

EP 0 771 827 B1

**Claims**

1. In charging a polyolefin, a vinylsilane compound and a radical polymerization initiator into an extruder and subjecting the charges to a graft reaction, a process for producing a silane-modified polyolefin characterized in that the section of a cylinder barrel of a screw extruder extending from a feed zone to the position immediately preceding a plasticizing zone is set at a temperature lower than the boiling point of the vinylsilane compound.

2. A production process as defined in claim 1 wherein in the section of the screw extruder extending from the feed zone to the position immediately preceding the plasticizing zone, the cylinder barrel is set at a temperature not lower than room temperature to not higher than the boiling point of the vinylsilane compound minus 40° C.

3. In supplying a vinylsilane compound to a polyolefin in a molten state within a screw extruder and subjecting the compounds to a graft reaction, a process for producing a silane-modified polyolefin characterized in that the vinylsilane compound is supplied to the screw extruder at a position where the molten polyolefin is subjected to a pressure not lower than the saturated vapor pressure of the vinylsilane compound at the temperature of the polyolefin.

4. A production process as defined in claim 3 characterized in that the extruder has a single screw, the molten polyolefin being subjected to a pressure not lower than the saturated vapor pressure of the vinylsilane compound at the temperature of the polyolefin by setting the lead and/or groove depth of the screw at a required value, or partially removing a flight of the screw.

5. A production process as defined in claim 3 characterized in that the extruder has two screws, the molten polyolefin being subjected to a pressure not lower than the saturated vapor pressure of the vinylsilane compound at the temperature of the polyolefin by setting the lead and/or groove depth of the screws at a required value, or partially removing flights of the screws, or attaching a kneading screw, screw of reverse lead or sealing ring.

6. A production process as defined in any one of claims 3 to 5 characterized in that the vinylsilane compound to be supplied to the extruder is pressurized to a level not lower than the pressure of the molten polyolefin.

7. An extruder apparatus having a hopper for charging a material resin therethrough and front and rear two liquid injection ports arranged downstream from the hopper, the extruder apparatus being characterized in that a vent is provided between the front liquid injection port and the rear liquid injection port, the distance between the front liquid injection port and the vent being so determined that the mean residence time of the resin in a molten state therebetween is 15 seconds to 15 minutes.

8. An extruder apparatus as defined in claim 7 characterized in that a front vent is also provided to the front of the front liquid injection port.

9. A process for producing a silane-modified polyolefin using an extruder apparatus defined in claim 7 or 8, the process being characterized in that a polyolefin resin or a resin composition containing the resin is charged into the extruder apparatus through the hopper, and melted and mixed therein while injecting a vinylsilane compound and a radical initiator into the resulting melt through the front liquid injection port, reducing the internal pressure of the extruder apparatus through the vent in the rear of the front liquid injection port and further injecting a silanol condensation catalyst through the rear liquid injection port.

10. A production process as defined in claim 9 characterized in that the internal pressure is reduced also through the front vent.

**Patentansprüche**

1. Verfahren zur Herstellung eines mit Silan modifizierten Polyolefins, wobei ein Extruder mit einem Polyolefin, einer Vinylsilanverbindung und einem Initiator für die radikalische Polymerisation beladen wird und die Beschickungsmaterialien einer Pfropfreaktion unterworfen werden, dadurch gekennzeichnet, dass der Abschnitt eines Zylinderkörpers eines Schneckenextruders, der sich von einer Einzugszone zu einer Position erstreckt, die einer Plastifizierungszone unmittelbar vorangeht, auf eine Temperatur eingestellt wird, die niedriger als der Siedepunkt der Vinylsilanverbindung ist.

**2.** Herstellungsverfahren nach Anspruch 1, wobei in dem Abschnitt des Schneckenextruders, der sich von der Einzugszone zu der Position erstreckt, die der Plastifizierungszone unmittelbar vorangeht, der Zylinderkörper auf eine Temperatur eingestellt wird, die nicht niedriger als die Raumtemperatur und nicht höher als der Siedepunkt der Vinylsilanverbindung minus 40° C ist.

**3.** Verfahren zur Herstellung eines mit Silan modifizierten Polyolefins, wobei eine Vinylsilanverbindung einem in einem geschmolzenen Zustand vorliegenden Polyolefin innerhalb eines Schneckenextruders zugeführt wird und die Verbindungen einer Pfropfreaktion unterworfen werden, dadurch gekennzeichnet, dass die Vinylsilanverbindung dem Schneckenextruder an einer Position zugeführt wird, wo das geschmolzene Polyolefin einem Druck unterworfen ist, der nicht niedriger als der gesättigte Dampfdruck der Vinylsilanverbindung bei der Temperatur des Polyolefins ist.

**4.** Herstellungsverfahren nach Anspruch 3, dadurch gekennzeichnet, dass der Extruder eine Einzelschnecke aufweist, das geschmolzene Polyolefin durch Einstellung des Vorlaufs und/oder der Rillentiefe der Schnecke auf einen erforderlichen Wert oder durch teilweise Entfernung eines Schneckengangs einem Druck unterworfen wird, der nicht niedriger als der gesättigte Dampfdruck der Vinylsilanverbindung bei der Temperatur des Polyolefins ist.

**5.** Herstellungsverfahren nach Anspruch 3, dadurch gekennzeichnet, dass der Extruder zwei Schnecken aufweist, das geschmolzene Polyolefin durch Einstellung des Vorlaufs und/oder der Rillentiefe der Schnecke auf einen erforderlichen Wert oder durch teilweise Entfernung eines Schneckengangs oder durch Anordnung einer Knetschnecke, einer Schnecke mit einem umgekehrten Vorlauf oder eines Dichtungsrings einem Druck unterworfen wird, der nicht niedriger als der gesättigte Dampfdruck der Vinylsilanverbindung bei der Temperatur des Polyolefins ist.

**6.** Herstellungsverfahren nach einem der Ansprüche 3 bis 5, dadurch gekennzeichnet, dass die dem Extruder zuzuführende Vinylsilanverbindung unter einen Druck gesetzt wird, der nicht niedriger als der Druck des geschmolzenen Polyolefins ist.

**7.** Extruder mit einem Beschickungstrichter für die Zuführung eines Harzmaterials und mit zwei Einspritzstellen für eine Flüssigkeit, einer vorderen und einer hinteren, die dem Beschickungstrichter nachgeordnet angeordnet sind, dadurch gekennzeichnet, dass zwischen der vorderen Einspritzstelle für eine Flüssigkeit und der hinteren Einspritzstelle für eine Flüssigkeit eine Entlüftung vorgesehen ist, wobei der Abstand zwischen der vorderen Einspritzstelle für eine Flüssigkeit und der Entlüftung so bestimmt ist, dass die durchschnittliche Verweilzeit des Harzes in einem geschmolzenen Zustand dazwischen 15 Sekunden bis 15 Minuten beträgt.

**8.** Extruder nach Anspruch 7, dadurch gekennzeichnet, dass ferner eine vordere Entlüftung vor der vorderen Einspritzstelle für eine Flüssigkeit vorgesehen ist.

**9.** Verfahren zur Herstellung eines mit Silan modifizierten Polyolefins unter Verwendung eines Extruders nach Anspruch 7 oder 8, dadurch gekennzeichnet, dass ein Polyolefinharz oder eine Harzzusammensetzung, die das Harz enthält, über einen Beschickungstrichter in den Extruder eingeführt und dort geschmolzen und gemischt wird, wobei eine Vinylsilanverbindung und ein radikalischer Initiator in das geschmolzenen Harz über die vordere Einspritzstelle für eine Flüssigkeit eingespritzt werden, der interne Druck des Extruders durch die hinter der vorderen Einspritzstelle für eine Flüssigkeit angeordnete Entlüftung reduziert wird und ein Silanol-Kondensationskatalysator durch die hintere Einspritzstelle für eine Flüssigkeit eingespritzt wird.

**10.** Herstellungsverfahren nach Anspruch 9, dadurch gekennzeichnet, dass der interne Druck auch durch die vordere Entlüftung reduziert wird.

**Revendications**

**1.** En chargeant une polyoléfine, un composé de vinylsilane et un initiateur de polymérisation radicalaire dans une extrudeuse et en soumettant les charges à une réaction de greffage, un procédé de fabrication d'une polyoléfine modifiée par un silane est caractérisé en ce que la section d'un corps de cylindre d'une extrudeuse à vis s'étendant depuis une zone d'alimentation vers la position précédant immédiatement une zone de plastification est réglée à une température inférieure au point d'ébullition du composé de vinylsilane.

**2.** Procédé de fabrication selon la revendication 1, dans lequel dans la section de l'extrudeuse à vis s'étendant depuis la zone d'alimentation vers la position précédant immédiatement la zone de plastification, le corps de cylindre est réglé à une température non inférieure à la température ambiante jusqu'à une température non supérieure au point d'ébullition du composé de vinylsilane moins 40 °C.

**3.** En fournissant un composé de vinylsilane à une polyoléfine à l'état fondu à l'intérieur d'une extrudeuse à vis et en soumettant les composés à une réaction de greffage, un procédé de fabrication d'une polyoléfine modifiée par un silane est caractérisé en ce que le composé de vinylsilane est fourni à l'extrudeuse à vis au niveau d'un emplacement où la polyoléfine fondue est soumise à une pression qui n'est pas inférieure à la pression de vapeur saturante du composé de vinylsilane à la température de la polyoléfine.

**4.** Procédé de fabrication selon la revendication 3, caractérisé en ce que l'extrudeuse comporte une seule vis, la polyoléfine fondue étant soumise à une pression qui n'est pas inférieure à la pression de vapeur saturante du composé de vinylsilane à la température de la polyoléfine en réglant le pas et/ou la profondeur de canal de la vis à une valeur requise, ou en éliminant en partie une spire de la vis.

**5.** Procédé de fabrication selon la revendication 3, caractérisé en ce que l'extrudeuse comporte deux vis, la polyoléfine fondue étant soumise à une pression qui n'est pas inférieure à la pression de vapeur saturante du composé de vinylsilane à la température de la polyoléfine en réglant le pas et/ou la profondeur de canal des vis à une valeur requise, ou en éliminant partiellement des spires des vis, ou en fixant une vis de malaxage, une vis à pas inverse ou une bague d'étanchéité.

**6.** Procédé de fabrication selon l'une quelconque des revendications 3 à 5, caractérisé en ce que le composé de vinylsilane devant être fourni à l'extrudeuse est mis sous pression à une valeur qui n'est inférieure à la pression de la polyoléfine fondue.

**7.** Dispositif d'extrudeuse comportant une trémie destinée à charger un matériau de résine par l'intermédiaire de celle-ci et deux orifices d'injection de liquides avant et arrière agencés en aval de la trémie, le dispositif d'extrudeuse étant caractérisé en ce qu'un évent est prévu entre l'orifice d'injection de liquide avant et l'orifice d'injection de liquide arrière, la distance entre l'orifice d'injection de liquide avant et l'évent étant déterminée de sorte que le temps de séjour moyen de la résine à l'état fondu entre ceux-ci soit de 15 secondes à 15 minutes.

**8.** Dispositif d'extrudeuse selon la revendication 7, caractérisé en ce qu'un évent avant est également prévu à l'avant de l'orifice d'injection de liquide avant.

**9.** Procédé de fabrication d'une polyoléfine modifiée par un silane utilisant un dispositif d'extrudeuse défini dans la revendication 7 ou 8, le procédé étant caractérisé en ce qu'une résine de polyoléfine ou une composition de résine contenant la résine est chargée dans le dispositif d'extrudeuse par l'intermédiaire de la trémie, puis fondue et mélangée dans celle-ci tout en injectant un composé de vinylsilane et un initiateur radicalaire dans le mélange fondu résultant par l'intermédiaire de l'orifice d'injection de liquide avant, en réduisant la pression interne du dispositif d'extrudeuse par l'intermédiaire de l'évent à l'arrière de l'orifice d'injection de liquide avant et en injectant ensuite un catalyseur de condensation de silanol par l'intermédiaire de l'orifice d'injection de liquide arrière.

**10.** Procédé de fabrication selon la revendication 9, caractérisé en ce que la pression interne est réduite également par l'intermédiaire de l'évent avant.

**Fig.1**

**Fig.2**

**Fig.3**

| C1 | C2 | C3 | C4 | C5 | C6 | C7 | C8 | C9 | C10 |
|---|---|---|---|---|---|---|---|---|---|
| FEED | PREHEATING TRABSOIRT | PREHEATING TRABSOIRT | PLASTICIZING | PLASTICIZING | PLASTICIZING | PLASTICIZING | VENTING | METERING | METERING |

Legend:

FULL FLIGHT, FORWARD (L/D=1.0, Lead=1.0)

FULL FLIGHT, FORWARD (L/D=1.5, Lead=1.5)

FULL FLIGHT, FORWARD (L/D=0.75, Lead=0.75)

FULL FLIGHT, FORWARD (L/D=0.5, Lead=1.0)

FULL FLIGHT, REVERSE (L/D=0.5, Lead=1.0)

FORWARD DISK (L/D=1.0, Lead=2.0, 5 DISKS)

REVERSE DISK (L/D=1.0, Lead=2.0, 5 DISKS)

NEUTRAL DISK (L/D=1.0, 3 DISKS)

TRAPEZOIDAL FLIGHT, FORWARD (L/D=1.25, Lead=1.25)

TRAPEZOIDAL FLIGHT, FORWARD (L/D=1.5, Lead=1.5)

TORPEDO RING (L/D=0.25)

SINGLE FULL FLIGHT (L/D=1.0, Lead=1.0)

FULL FLIGHT, FORWARD (L/D=1.25, Lead=1.25)

Fig.4

19

*Fig.5*

*Fig.6*

20

FULL FLIGHT, FORWARD
(L/D=1.0、Lead=1.0)

FULL FLIGHT, FORWARD
(L/D=1.5、Lead=1.5)

FULL FLIGHT, FORWARD
(L/D=0.75、Lead=0.75)

FULL FLIGHT, FORWARD
(L/D=1.5、Lead=0.75)

FULL FLIGHT, REVERSE
(L/D=0.5、Lead=1.0)

TORPEDO RING
(L/D=0.25)

FORWARD DISK
(L/D=1.0、Lead=2.0、5 DISKS)

REVERSE DISK
(L/D=1.0、Lead=2.0、5 DISKS)

NEUTRAL DISK
(L/D=1.0、5 DISKS)

NEUTRAL DISK
(L/D=0.75、3 DISKS)

TRAPEZOIDAL FLIGHT, FORWARD
(L/D=1.25、Lead=1.25)

TRAPEZOIDAL FLIGHT, FORWARD
(L/D=1.5、Lead=1.5)

*Fig.7*

Fig.8

Fig.9

Fig.10